(19) **Europäisches Patentamt** / **European Patent Office** / **Office européen des brevets**

(11) **EP 4 597 346 A1**

(12) **EUROPEAN PATENT APPLICATION**
published in accordance with Art. 153(4) EPC

(43) Date of publication:
06.08.2025 Bulletin 2025/32

(21) Application number: 23872972.7

(22) Date of filing: 22.09.2023

(51) International Patent Classification (IPC):
*G06F 21/55* (2013.01)     *G06F 21/51* (2013.01)
*G06F 21/56* (2013.01)

(52) Cooperative Patent Classification (CPC):
**G06F 21/51; G06F 21/55; G06F 21/56**

(86) International application number:
**PCT/KR2023/014512**

(87) International publication number:
**WO 2024/071855 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 26.09.2022 KR 20220121599
14.04.2023 KR 20230049462

(71) Applicant: **Inka Entworks, Inc.**
**Gangnam-gu**
**Seoul 06109 (KR)**

(72) Inventors:
• **HONG, Hui-Jeong**
**Seoul 06109 (KR)**
• **KIM, Jung-Soo**
**Seoul 06109 (KR)**

(74) Representative: **Jacobacci Coralis Harle**
**32, rue de l'Arcade**
**75008 Paris (FR)**

(54) **MACROBOT DETECTION SERVICE PROVIDING METHOD AND SYSTEM**

(57) The present disclosure provides a method for providing a macro bot detection service, performed by at least one processor. The method may include the steps of acquiring an application code provided from a client system, embedding detection code into the application code to detect input from a macro program, and providing the application code into which the detection code is embedded to the client system.

FIG. 6

## Description

## Technical Field

The present disclosure relates to a method for providing a macro bot detection service and, more particularly, to a method and system for providing a macro bot detection service by embedding a detection module for detecting macro bots into an application.

## Background of the Invention

Macro generation programs, which automatically generate input data, are widely distributed and used in online environments. Such macro generation programs are extensively utilized in various applications, including game applications, online ticket purchasing websites and online voting platforms.

A macro bot containing a specific algorithm may be executed by a macro generation program, and the macro bot may automatically generate input data based on the algorithm. The use of macro bots can lead to an unfair environment. For example, if macro bots are applied in game applications, macro bots can lead to an unbalanced gaming environment. Specifically, in a game application that does not support automatic hunting, a user may utilize a macro bot to automatically perform gameplay, such as acquiring in-game items and leveling up. Additionally, a user may use a macro bot to easily execute skills that typically require a high level of proficiency.

Accordingly, game developers either develop a macro bot blocking program themselves or request a solution from a third-party security provider to block macro bots. For example, in case of utilizing the solutions provided by a third-party security provider, the security provider may provide macro bot detection functionality in the form of a software development kit (SDK).

However, there is a problem in that creating an SDK-based macro bot blocking program requires a significant amount of labor and time. Furthermore, the SDK-based macro bot blocking program is implemented for a specific application and cannot be universally applied to other applications.

Accordingly, there is a need for a technology that enables the application of a macro bot blocking program to be adapted to an application with minimal labor and time.

## Description of the Invention

### Objective of the Invention

The present disclosure provides a method, a computer-readable recording medium storing a computer program and a system, for providing a macro bot detection service to address the aforementioned problems.

### Summary of the Invention

The present disclosure may be implemented in various forms, including methods, systems and/or computer programs stored on a computer-readable storage medium.

According to an embodiment of the present disclosure, a method for providing a macro bot detection service performed by at least one processor, the method may comprise steps of: acquiring an application code provided from a client system; embedding a detection code into the application code, the detection code being configured to detect an input from a macro program; and providing the application code into which the detection code is embedded to the client system.

In another aspect, the application code may be compiled code. Additionally, the step of acquiring the application code may comprise decompiling the application code to obtain first source code associated with the application. Wherein the step of embedding the detection code into the application code may comprise: inserting second source code associated with the detection code into the obtained first source code; and compiling the first source code into which the second source code is inserted.

In yet another aspect, the application code may be script code. Additionally, the step of embedding the detection code into the application code may comprise determining a target location into which the detection code is to be inserted, within the entire area of the application code; and inserting the script-based detection code at the determined target location.

In other aspect, the application code may be a code associated with a machine language. Additionally, the step of embedding the detection code into the application code may comprise: determining a target location into which the detection code is to be inserted, within the entire area of the application code; and inserting the detection code at the determined target location.

In other aspect, the step of determining the target location into which the detection code is to be inserted may comprise: identifying a location which contains a code associated with the input, within the entire area of the application code; and determining the target location based on the identified location.

In other aspect, the method for providing a macro bot detection service may further comprise steps of, prior to the step of acquiring the application code: training a machine learning model to detect input from a macro program by applying a training set including a plurality of training input data to the machine learning model; and generating the detection code based on the trained machine learning model.

In other aspect, the method for providing a macro bot detection service may further comprise steps of, after the step of providing the application code into which the detection code is embedded to the client system: receiving a plurality of log data associated with inputs from a plurality of user terminals where the application code is executed; generating a training set based on the received plurality of log data; training a machine learning model configured to detect an input from the macro program by applying the training set to the machine learning model; and updating at least one of data associated with the machine learning model and the detection code, based on the trained machine learning model.

In other aspect, the method for providing a macro bot detection service may further comprise the step of, after the step of updating at least one of data associated with the machine learning model and the detection code: transmitting data for updating the detection code to the client system.

In other aspect, the step of embedding the detection code into the application code may comprise embedding a security code into the application code, where the security code is for executing at least one of a first function for blocking hacking, a second function for performing anti-debugging, a third function for checking data integrity, a fourth function for blocking an emulator and a fifth function for blocking a virtual operating system environment. Additionally, the step of providing the application code to the client system may comprise providing the application code into which the security code and detection code are embedded to the client system.

In other aspect, in response to execution of the application code into which the detection code is inserted at the client system or a user terminal associated with the client system, a detection module associated with the detection code may be embedded into the user terminal. Additionally, the detection module may be configured to monitor whether the input from a macro program is detected at the client system or the user terminal associated with the client system.

In other aspect, the detection module may be further configured to block the execution of the application in response to detecting the input from the macro program on the user terminal.

A computer program stored on a computer-readable recording medium for executing the method for providing a macro bot detection service on a computer may be provided.

According to another embodiment of the present disclosure, an information processing system may comprise a memory; and at least one processor connected to the memory and configured to execute at least one computer-readable program stored in the memory. Additionally, the at least one program may comprise instructions to: acquire an application code provided from a client system; embed a detection code into the application code, where the detection code is configured to detect an input from a macro program; and provide the application code into which the detection code to the client system is embedded.

**Advantageous Effect of the Invention**

According to some embodiments of the present disclosure, a detection module for detecting macro bots is embedded into an application file received from a client system, and the application file into which the detection module is embedded may be returned to the client system. Accordingly, the client may quickly obtain an application file into which the detection module is embedded by simply providing the application file to an information processing system, without the need to develop a separate detection program.

According to some embodiments of the present disclosure, a detection module capable of blocking macro bots may be embedded into various applications.

According to some embodiments of the present disclosure, a code constituting the detection module may be generated based on a machine learning model trained to detect inputs from macro programs. As a result, inputs from macro bots may be detected with great accurately.

According to some embodiments of the present disclosure, log data may be collected based on input data from a user terminal, and the machine learning model may be further trained based on the log data. Additionally, the detection module may be updated based on the further trained machine learning model. Accordingly, even if a new macro bot is developed, the updated detection module may detect an input from the new macro bot.

According to some embodiments of the present disclosure, while a security module is embedded into the application file and the application is being executed, at least one function among hacking prevention, anti-debugging, data integrity verification, emulator blocking or virtual operating system environment blocking may be performed on the user terminal. As a result, the security of the user terminal may be enhanced.

The effects of the present disclosure are not limited to those mentioned above, and other effects not explicitly described herein will be apparent to those skilled in the art based on the claims.

**Brief Description of the Drawings**

The following embodiments of the present disclosure will be described with reference to the accompanying drawings. Similar reference numerals denote similar elements, but the scope of the invention is not limited thereto.

FIG. 1 is a diagram illustrating a method of embedding a detection module for macro bot detection into an application file, according to an embodiment of the present disclosure.

FIG. 2 is a schematic diagram illustrating a configuration in which an information processing system is connected to enable communication with a plurality of user terminals, according to an embodiment of the present disclosure.

FIG. 3 is a block diagram illustrating the internal configurations of a user terminal and an information processing system, according to an embodiment of the present disclosure.

FIG. 4 is a diagram illustrating an example of a training method for a machine learning model configured for macro bot detection, according to an embodiment of the present disclosure.

FIG. 5 is an exemplary diagram illustrating an artificial neural network model, according to an embodiment of the present disclosure.

FIG. 6 is a flowchart illustrating a method for installing an application into which a detection module is embedded on a user terminal according to an embodiment of the present disclosure.

FIG. 7 is a flowchart illustrating a method in which a machine learning model is trained based on log data collected in a user terminal, according to an embodiment of the present disclosure.

FIG. 8 is a flowchart illustrating a method in which an application is controlled after a macro bot is detected, according to an embodiment of the present disclosure.

FIG. 9 is a flowchart illustrating a method for providing a macro bot detection service, according to an embodiment of the present disclosure.

**Detailed Description of the Invention**

Hereinafter, specific details for implementing embodiments of the present disclosure will be described in detail with reference to the accompanying drawings. However, in the following description, specific explanations regarding well-known functions and configurations that may unnecessarily obscure the gist of the present disclosure will be omitted.

In the accompanying drawings, the same reference numerals are assigned to identical or corresponding components. Additionally, in the descriptions of the following embodiments, redundant descriptions to identical or corresponding components may be omitted. However, the omission of a description regarding a certain component does not necessarily imply that such a component is excluded from embodiments.

The advantages and features of the disclosed embodiments, as well as the methods for achieving them, will become more apparent from the embodiments described below with reference to the accompanying drawings. However, the present disclosure is not limited to the embodiments described herein and may be implemented in various other forms. Rather, these embodiments are provided to ensure the completeness of the disclosure and to fully convey the scope of the invention to those skilled in the art.

Hereinafter, brief explanations of the terms used in this disclosure will be provided, and a detailed description of the disclosed embodiments will be given. The terms used in this disclosure have been selected from widely used general terms, considering the functionality in the present disclosure, but such selection may vary depending on the intentions of a skilled person in the relevant field, case law, the emergence of new technologies and other factors. Additionally, in certain cases, terms selected by the applicant may be used, and in such cases, the meaning of those terms will be clearly described in the relevant portion of the disclosure. Accordingly, the terms used in the present disclosure should be interpreted based on their meanings and the overall context of the present disclosure, rather than merely based on their literal definitions.

In this disclosure, singular expressions should be understood to include plural meanings unless explicitly specified as singular in the context, and plural expressions should be understood to include singular meanings unless explicitly specified as plural in the context. Throughout the disclosure, when a certain part is described as 'including' a certain component, it should be understood that, unless there is a specific contrary disclosure, the part may further include other components, unless explicitly stated otherwise.

Furthermore, the terms "module" or "unit" used in this disclosure refer to software or hardware components that perform specific functions. However, "module" or "unit" is not limited to merely software or hardware. A "module" or "unit" may be configured to be located in an addressable storage medium or configured to operate one or more processors. Accordingly, for example, a "module" or "unit" may include at least one of software components, object-oriented software components, class components and task components, processes, functions, attributes, procedures, subroutines, program code segments, drivers, firmware, microcode, circuits, data, databases, data structures, tables, arrays and variables. The functions provided by components, modules or units may be divided into a smaller number of components, modules or units, or combined with additional components, modules or units.

According to an embodiment of the present disclosure, a "module" or "unit" may be implemented using a processor and memory. The term "processor" should be broadly interpreted to include general-purpose processors, central processing units (CPUs), microprocessors, digital signal processors (DSPs), controllers, microcontrollers, state machines and the like. In some environments, the "processor" may refer to an application-specific integrated circuit (ASIC), a programmable logic device (PLD), a field-programmable gate array (FPGA) or the like. The "processor" may also refer to a combination of processing devices, such as a combination of a DSP and a microprocessor, a combination of the plurality of microprocessors, a combination of one or more microprocessors combined with a DSP core or any other similar configurations.

Additionally, the term "memory" should be broadly interpreted to include any electronic component capable of storing electronic information. The term "memory" may refer to various types of processor-readable media, such as random-access memory (RAM), read-only memory (ROM), non-volatile random-access memory (NVRAM), programmable read-only memory (PROM), erasable programmable read-only memory (EPROM), electrically erasable PROM (EEPROM), flash memory, magnetic or marking data storage devices, registers and the like. If a processor may read information from and/or write information to the memory, the memory is considered to be in an electronic communication state with the processor. The memory integrated into a processor is also considered to be in an electronically communicable state with the processor.

In the present disclosure, a "system" may include at least one device among a server device and a cloud device, but is not limited thereto. For example, the system may be composed of one or more server devices. In another example, the system may be composed of one or more cloud devices. In yet another example, the system may be composed of a combination of a server device and a cloud device operating together in an integrated manner.

Additionally, in the following embodiments, the terms "first," "second," "A," "B," "(a)" and "(b)" are used merely to distinguish one component from another and do not imply any particular nature, order, or sequence of the components.

Furthermore, in the following embodiments, when a certain component is described as being "connected," "coupled" or "linked" to another component, it should be understood that the component may be directly connected or linked to the other component, but another component may also be "connected," "coupled," or "linked" between the components.

In addition, the terms 'comprises' and/or 'comprising' used in the following embodiments indicate that the mentioned components, steps, actions and/or elements do not exclude the presence or addition of one or more other components, steps, actions and/or elements.

Before describing the various embodiments of the present disclosure, the terms used in the embodiments will be explained.

In the embodiments of the present disclosure, "application code" refers to a program code for implementing an application and may include a source code and/or a binary code. Here, the source code may be a programming code before it is compiled.

In the embodiments of the present disclosure, a "macro bot" refers to a macro program that generates input data automatically based on an algorithm. In other words, a macro bot may be a macro program created by a macro generation program to automatically perform specific tasks.

In the embodiments of the present disclosure, "detection code" refers to a program code for implementing a detection module by software and may include a source code and/or a binary code.

In the embodiments of the present disclosure, "security code" refers to a program code for implementing a security module by software and may include a source code and/or binary code.

Hereinafter, various embodiments of the present disclosure will be described in detail with reference to the accompanying drawings.

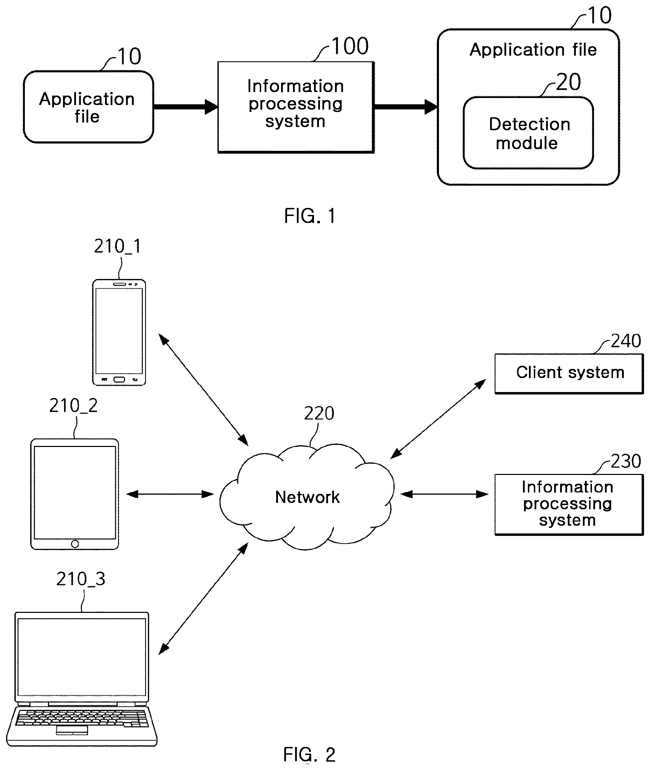

FIG. 1 is a diagram illustrating a method into which a detection module 20 for macro bot detection is embedded into an application file 10 according to an embodiment of the present disclosure. As illustrated in FIG. 1, an information processing system 100 may receive an application file 10 from a client system and embed a detection module 20 into the received application file 10. Additionally, the application file 10 into which the detection module 20 is embedded may be provided to the client system. In other words, an information processing system 100 that provides a network-based macro bot detection service may embed a detection module 20 into an application file 10 and deliver it to the client system. Here, the client system may be a system associated with a developer responsible for developing the application.

According to an embodiment, the information processing system 100 may insert a detection code associated with the detection module into the application code, so that the detection module may be embedded into the application. At this time, the information processing system 100 may analyze the code included in the application file 10, determine a location into which the detection code is to be inserted within the entire area of the code, and insert the detection code at the determined location. Here, inserting the detection code may refer to either the whole or a part of the detection code being inserted into the application code, or the insertion of a command code for a function call that performs a procedure associated with the detection code. Additionally, if the detection code is implemented as a separate library, inserting the detection code may involve an inserting code associated with the library into the application code.

Additionally, or alternatively, the information processing system 100 may insert a security code associated with a security module into the application code, so that the security module may be embedded into the application. The information processing system 100 may analyze the code included in the application file 10, determine a location into which the security code is to be inserted within the entire area of the code, and insert the security code at the determined location. Here, inserting the security code may refer to either the whole or a part of the security code being inserted into the application code, or the insertion of a command code for a function call that performs a procedure associated with the security code.

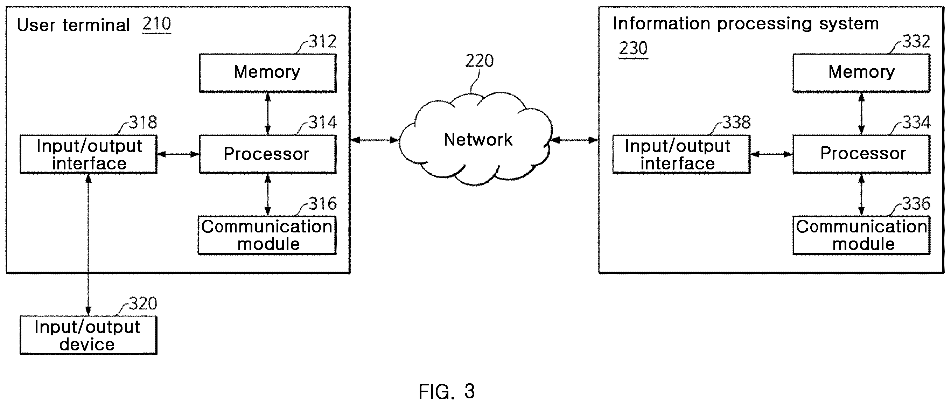

According to an embodiment, the detection code constituting the detection module may be generated based on a trained machine learning model. In the embodiment, the machine learning model may be trained to detect an input from a macro program (macro bot) based on a training set including a plurality of training input data. A macro bot detection algorithm associated with the machine learning model may be applied to the detection module, and the detection module may detect the input from a macro bot based on the macro bot detection algorithm. A detailed description of the training method performed in the machine learning model will be provided with reference to FIGs. 3 to 5.

The information processing system 100 may transmit an application file 10 into which at least one of the detection module 20 and the security module is embedded into the client system. The client system may upload to an app store the application file 10 into which at least one of the detection module 20 and the security module is embedded. Accordingly, a user may download the application file 10 into which at least one of the detection module and the security module is embedded.

In response to executing the application on a user terminal, the detection module 20 may be activated. The activated detection module 20 may monitor input data. If an input from a macro bot is detected, the detection module 20 may initiate a subsequent process based on a predetermined policy. For example, if the number of macro bot input detections reaches a first threshold, the detection module 20 may temporarily pause the execution of the application, display a CAPTCHA screen on the user terminal, and resume the execution of the paused application only if the CAPTCHA verification is successfully completed. In another example, if the number of macro bot input detections reaches a second threshold, the detection module 20 may terminate the running of the application. Here, the second threshold may be greater than the first threshold.

FIG. 2 is a schematic diagram illustrating a configuration in which an information processing system 230 is connected to communicate with a plurality of user terminals 210_1, 210_2, 210_3 according to an embodiment of the present disclosure. As illustrated, the plurality of user terminals 210_1, 210_2, 210_3 may be connected via a network 220 to an information processing system 230 that provides a macro bot detection service. Additionally, the plurality of user terminals 210_1, 210_2, 210_3 may be connected via the network 220 to a client system 240 that provides services such as game services, portal services, banking services and ticket reservation services. The information processing system 100 in FIG. 1 may correspond to the information processing system 230.

In an embodiment, the information processing system 230 may include one or more server devices and/or databases or one or more distributed computing devices and/or distributed databases based on cloud computing services, configured to store, provide and execute a computer-executable program (e.g., a downloadable application) and data related to services such as macro bot detection. For example, the information processing system 230 may include a cloud computing device for embedding at least one of a security module and a detection module into an application file and a server for training a machine learning model. A virtual machine for embedding at least one of a security module and a detection module into an application file may be installed in the cloud computing device. In another example, the cloud computing device included in the information processing system 230 may install a first virtual machine for embedding at least one of a security module and a detection module into an application file and a second virtual machine for training a machine learning model.

The macro bot detection service provided by the information processing system 230 may be provided to the client system 240. For example, the information processing system 230 may receive an application file containing an application code from the client system 240, embed a detection module and/or a security module into the received application file, and transmit the application file into which the detection module and/or security module are embedded back to the client system 240.

The client system 240 may include at least one server and/or terminal providing web services such as game services, portal services, banking services and ticket reservation services. The client system 240 may transmit an application file for providing web services to the information processing system 230 and receive an application file into which a detection module and/or a security module are embedded from the information processing system 230. The client system 240 may upload the application file into which the detection module and/or security module are embedded into a repository where downloads are available, such as an app store.

The plurality of user terminals 210_1, 210_2, 210_3 may communicate with both the information processing system 230 and the client system 240 via the network 220. The network 220 may be configured to enable communication among the plurality of user terminals 210_1, 210_2, 210_3, the information processing system 230 and the client system 240. Depending on the installation environment, the network 220 may include wired networks such as Ethernet, power line communication, telephone line communication and RS-serial communication, as well as wireless networks such as mobile communication networks, wireless LAN (WLAN), Wi-Fi, Bluetooth and ZigBee or a combination thereof. The communication method is not limited, and it may include communication methods utilizing communication networks (such as mobile networks, wired internet, wireless internet, broadcast networks, satellite networks, etc.) that the network 220 may include, as well as short-range wireless communication between user terminals 210_1, 210_2, 210_3.

According to an embodiment, the user terminals 210_1, 210_2, 210_3 may download the application file uploaded from the client system 240 and install the application by executing the installation file included in the downloaded application file. When the application is executed on the user terminals 210_1, 210_2, 210_3, the detection module and/or security module associated with the application may be executed. The detection module may collect log data associated with input data and transmit the collected log data to the information processing system 230.

In FIG. 2, the mobile phone terminal 210_1, tablet terminal 210_2 and PC terminal 210_3 are illustrated as examples of user terminals, but examples of user terminals are not limited to these. The user terminals 210_1, 210_2, 210_3 may be any computing device capable of wired and/or wireless communication, on which applications or web browsers may be installed and executed. For example, the user terminals may include smartphones, mobile phones, navigation devices, computers, laptops, digital broadcast terminals, PDAs (Personal Digital Assistants), PMPs (Portable Multimedia Players), tablet PCs, game consoles, wearable devices, IoT (Internet of Things) devices, VR (Virtual Reality) devices, AR (Augmented Reality) devices, set-top boxes and so on. Additionally, although FIG. 2 shows that three user terminals 210_1, 210_2, 210_3 are communicating with the information processing system 230 via the network 220, this is not limited. Rather, a different number of user terminals may be configured to communicate with the information processing system 230 via the network 220.

FIG. 3 is a block diagram illustrating the internal configurations of a user terminal 210 and an information processing system 230 according to an embodiment of the present disclosure. The user terminal 210 may refer to any computing device capable of executing an application associated with a client system and supporting wired/wireless communication. For example, the user terminal 210 may include a mobile phone terminal 210_1, a tablet terminal 210_2 and a PC terminal 210_3 as shown in FIG. 2. As illustrated, the user terminal 210 may include a memory 312, a processor 314, a communication module 316 and an input/output (I/O) interface 318. Similarly, the information processing system 230 may include a memory 332, a processor 334, a communication module 336 and an I/O interface 338. As shown in FIG. 3, the user terminal 210 and the information processing system 230 may be configured to communicate information and/or data via a network 220 using their respective communication modules 316, 336. Additionally, an I/O device 320 may be configured to input information and/or data into the user terminal 210 via the I/O interface 318 or output information and/or data generated from the user terminal 210.

The memory 312, 332 may include a non-transitory computer-readable recording medium. According to an embodiment, the memory 312, 332 may include permanent mass storage devices such as read-only memory (ROM), disk drives, solid-state drives (SSDs) and flash memory. In another example, ROM, SSDs, flash memory and disk drives may be implemented as separate permanent storage devices distinct from the memory and included in the user terminal 210 or the information processing system 230. Additionally, the memory 312, 332 may store an operating system and at least one program code (e.g., a detection code for macro bot detection executed on the user terminal 210).

These software components may be loaded from any computer-readable recording medium different from the memory 312, 332. Such separate computer-readable recording medium may include recording media that may be directly connected to the user terminal 210 and the information processing system 230, such as floppy drives, disks, tapes, DVD/CD-ROM drives, memory cards and other computer-readable recording media. As another example, the software components may be loaded into the memory 312, 332 by a communication module rather than a computer-readable recording medium. For example, at least one program may be loaded into memory 312, 332 based on a computer program installed by files (provided through the network 220 by developers or by a file distribution system configured to distribute installation files for the application).

The processor 314, 334 may be configured to process instructions of a computer program by performing basic arithmetic, logic and I/O operations. The instructions may be provided to the processor 314, 334 by the memory 312, 332 or the communication module 316, 336. For example, the processor 314, 334 may execute received instructions according to a program code stored in a storage device such as the memory 312, 332.

The communication module 316, 336 may provide a configuration or functionality that enables communication between the user terminal 210 and the information processing system 230 through the network 220. Additionally, the communication module 316, 336 may also provide a configuration or functionality that allows the user terminal 210 and/or the information processing system 230 to communicate with other user terminals or other systems (e.g., a separate cloud system, etc.). For example, a request or data generated by the processor 314 of the user terminal 210 according to a program code stored in the memory 312 may be transmitted to the information processing system 230 via the network 220 under the control of the communication module 316. Conversely, at least one of control signals, commands and data provided by the processor 334 of the information processing system 230 may be transmitted via the communication module 336 and the network 220, and received by the user terminal 210 through the communication module 316 of the user terminal 210.

The I/O interface 318 may serve as an interface for an I/O device 320. For example, an input device may include a camera having an audio and/or image sensor, a keyboard, a microphone and a mouse, while output devices may include a display, a speaker and a haptic feedback device. As another example, the input/output interface 318 may be a means for interfacing with a device where input and output functions are integrated into a single configuration or functionality, such as a touchscreen. For example, during the process in which the processor 314 of the user terminal 210 processes the instructions of the computer program loaded in the memory 312, a service screen configured using information and/or data provided from the information processing system 230 or another user terminal may be displayed on the display through the input/output interface 318. Although FIG. 3 illustrates the I/O device 320 as being separate from the user terminal 210, it is not limited thereto, but the I/O device 320 and the user terminal 210 may be configured as a single device. Additionally, the input/output interface 338 of the information processing system 230 may be a means for connecting to the information processing system 230 or a means for interfacing with an input or output device (not shown) that may be included in the information processing system 230. Although FIG. 3 illustrates the I/O interfaces 318, 338 as separate elements from the processors 314, 334, they are not limited thereto, thus the I/O interfaces 318, 338 may be integrated into the processors 314, 334.

The user terminal 210 and the information processing system 230 may include additional components beyond those shown in FIG. 3. However, most of these components correspond to conventional technologies and need not be explicitly illustrated. According to an embodiment, the user terminal 210 may include at least some of the aforementioned I/O devices 320. Additionally, the user terminal 210 may further include components such as a transceiver, a Global Positioning System (GPS) module, a camera, various sensors and a database.

While the program for the detection module or the security module, etc., is operating, the processor 314 may receive text, images, videos, audios and/or actions inputted or selected by input devices which are connected to the I/O interface 318, such as a touch screen, keyboard, a camera including audio sensors and/or image sensors and microphone. The received text, images, videos, audios and/or actions may be stored in the memory 312 or provided to the information processing system 230 via the communication module 316 and the network 220.

The processor 314 of the user terminal 210 may be configured to manage, process and/or store information and/or data received from the I/O device (thereby), other user terminals, the information processing system 230 and/or the plurality of external systems. Information and/or data processed by the processor 314 may be provided to the information processing system 230 via the communication module 316 and the network 220. The processor 314 of the user terminal 210 may also transmit information and/or data to the I/O device 320 via the I/O interface 318. For example, the processor 314 may transmit received information and/or data, thereby controlling a display device included in or connected to the user terminal 210 to display the received information and/or data.

The processor 334 of the information processing system 230 may be configured to manage, process and/or store information and/or data received from the plurality of user terminals 210 and/or the plurality of external systems. Information and/or data processed by the processor 334 may be provided to the user terminal 210 via the communication module 336 and the network 220.

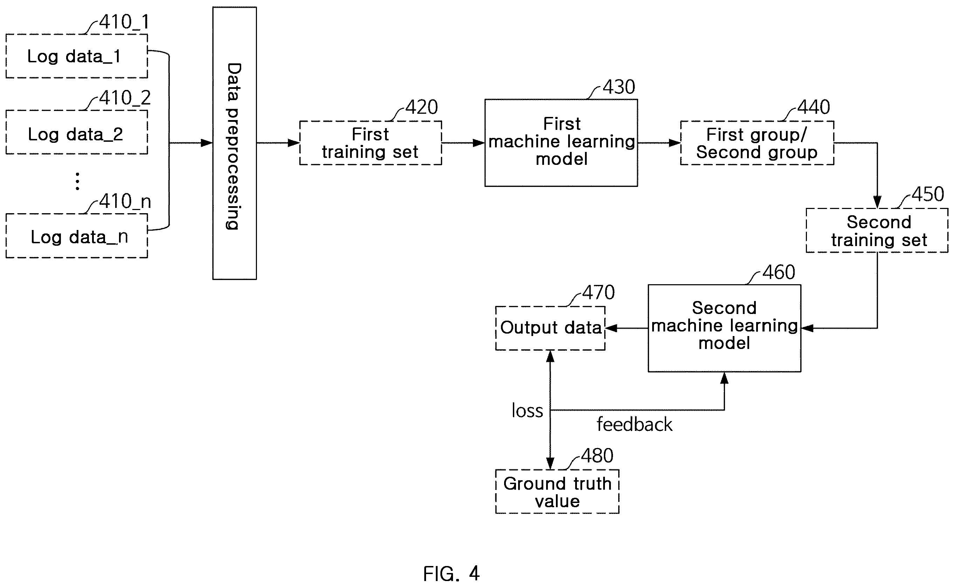

FIG. 4 is a diagram illustrating an example of a training method for a machine learning model 460 configured for macro bot detection according to an embodiment of the present disclosure. As illustrated in FIG. 4, a plurality of log data 410_1 to 410_n may be collected or arbitrarily generated. For example, each log data 410_1 to 410_n may include the plurality of data inputs that were actually inputted by a user terminal. In another example, each log data 410_1 to 410_n may include input data that was arbitrarily generated by an information processing system or another system. Here, a single log data 410_1 to 410_n may include the plurality of input data inputted by a user terminal during a unit time period. The unit time period may be a predetermined time period, and the input data may include a collection timestamp, touch coordinate values and touch pressure values.

The plurality of log data 410_1 to 410_n may be preprocessed to form a first training set 420 that includes the plurality of training input data. The training input data may be generated in a quantity corresponding to the number of log data and included in the first training set 420. According to an embodiment, the information processing system may preprocess the plurality of input data included in the log data 410_1 to 410_n and extract input pattern features of each log data 410_1 to 410_n from the preprocessing results. Additionally, the information processing system may generate the plurality of training data that include input pattern features of each log data 410_1 to 410_n and include the generated training data in the first training set 420.

According to an embodiment, input pattern features may include at least one of: a first feature value related to the touch position, a second feature value related to the touch pressure, or a third feature value related to the touch area. The touch area may be the size of a portion of the screen that is touched within the entire screen during a predetermined time period. In an embodiment, the information processing system may calculate the first feature value associated with the touch position over time based on the touch coordinate value included in each of the plurality of input data. Additionally, the system may calculate the second feature value associated with values of the touch pressures over time based on the touch pressure values included in each of the plurality of input data. Furthermore, the information processing system may cluster the input data into groups at predetermined time periods based on collection timestamps. For example, if the collection period of log data is n seconds (where n is a natural number), the information processing system may cluster the plurality of input data into m groups at n/m second periods (where m is a natural number). Furthermore, the information processing system may calculate the touch area for each group based on the touch coordinates included in each of the clustered input data, and calculate the third feature value including the touch area for each group. Here, the touch area for each group may be related to the touch area over time.

In an embodiment, the first feature value, the second feature value and the third feature value are multidimensionally transformed, and a multidimensional feature vector based on the first feature value, the second feature value and the third feature value may be generated.

When the plurality of training data included in the first training set 420 is inputted into a first machine learning model 430, the first machine learning model 430 may cluster the training data into a first group and a second group 440. For example, the first machine learning model 430 may classify the training data based on at least one of the first feature value, second feature value and third feature value, clustering the training data with a first type of input pattern into the first group and the training data with a second type of input pattern into the second group. At least one of the following clustering algorithms may be applied to the first machine learning model 430 to perform clustering on the training data: K-Means Clustering, Mean-Shift Clustering, Gaussian Mixture Model (GMM) or Density-Based Spatial Clustering of Applications with Noise (DBSCAN).

After clustering is completed, one of the first group or the second group may be determined to be associated with input data generated by a macro bot. At least one sample data generated by a macro bot is pre-stored, and a group containing a greater amount of data that matches or is similar to the sample data may be determined as data inputted by the macro bot. For example, if the first group is determined to contain data inputted by the macro bot, the second group may be determined to contain data inputted by the user. Hereinafter, it is assumed that the first group contains the data inputted by the macro bot.

A second training set 450 including both the training data corresponding to the first group and the training data corresponding to the second group, may be generated. Subsequently, the training data included in the second training set 450 may be sequentially inputted into a second machine learning model 460 for training the second machine learning model 460. The second machine learning model 460 may analyze the training data and generate output data 470 that includes a macro bot detection result. Here, the detection result may include "Macro Bot Detected", "No Macro Bot Detected" or a numerical value related to "Possibility of detecting a macro bot". At least one of the first feature value, second feature value and third feature value included in the training data may act as a key factor that influences the output result and may affect the detection result included in the output data 470.

The loss value between the output data 470 and the ground truth value 480 may be calculated. The calculated result may be fed back into the second machine learning model 460, to adjust the weights of at least one node in the second machine learning model 460. Here, the ground truth value 480 may include a value indicating whether the input was generated by a macro bot or not. For example, if the training data inputted into the second machine learning model 460 is included in the first group, the ground truth value may include a value related to "the input is from a macro bot." Conversely, if the training data inputted into the second machine learning model 460 is included in the second group, the ground truth value may include a value associated with "the input is not from a macro bot."

A loss value between the detection result included in the output data 470 outputted from the second machine learning model 460 and the value indicating whether or not the input is generated by a macro bot included in the ground truth value 480 may be calculated. Various loss functions may be used to compute the loss value, including Mean Squared Error (MSE), Root Mean Squared Error (RMSE), Cross Entropy Error (CEE) or Binary Cross Entropy Error (BCEE). The calculated loss value may be fed back into the second machine learning model 460 to adjust the weights of at least one node in the second machine learning model 460.

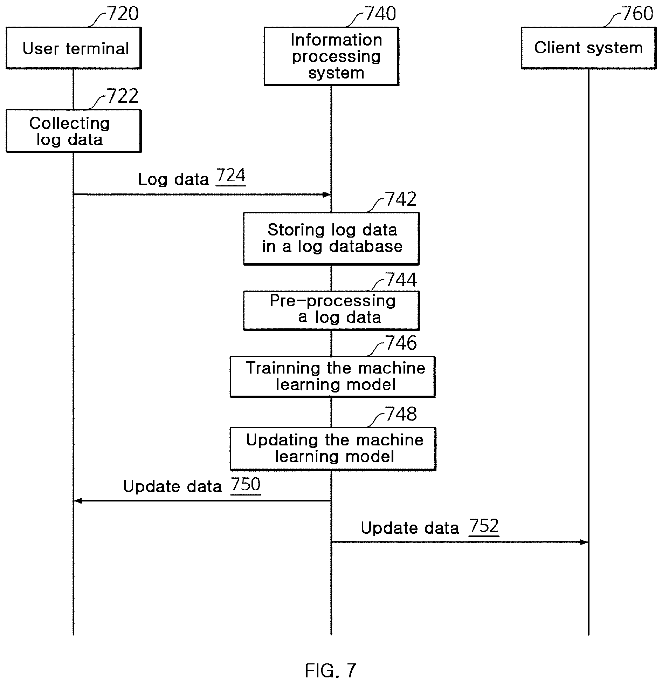

When training is repeatedly performed using a plurality of training data, the weights of at least one node in the second machine learning model 460 may converge to an optimal value. According to some embodiments, the weights of at least one node in the second machine learning model 460 may be associated with at least one of the first feature value, second feature value and third feature value. In such cases, the detection algorithm associated with the second machine learning model 460 may include a mathematical formula for producing macro bot detection results. The following [Equation 1] is an example of a mathematical formula used in the detection algorithm associated with the second machine learning model 460. A detailed explanation of the mathematical formula associated with the detection algorithm will be provided with reference to FIG. 7.

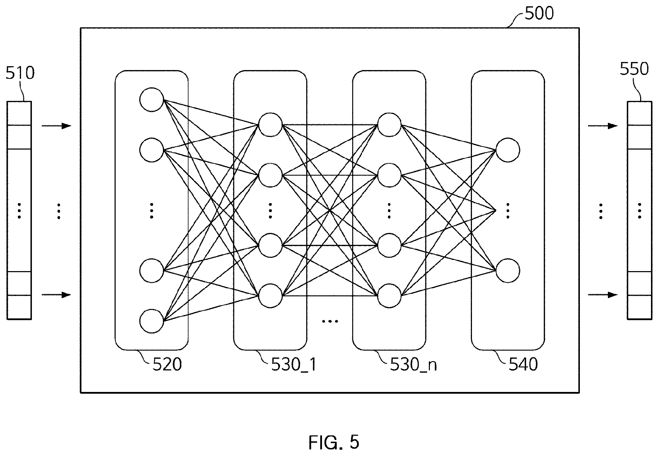

FIG. 5 is a diagram illustrating an example of an artificial neural network model 500 according to an embodiment of the present disclosure. The artificial neural network model 500 is an example of a machine learning model and may refer to a statistical learning algorithm or a structure for executing such an algorithm, implemented based on the structure of biological neural networks as known in the fields of machine learning and cognitive science.

According to an embodiment, the artificial neural network model 500 may represent a machine learning model.

This model improves problem-solving capability by learning to reduce the error between the correct output and the inferred output for a given input. To achieve this, the synaptic weights in the model are repeatedly adjusted by nodes, wherein the nodes are artificial neurons that form a network through synaptic connections similar to those in biological neural networks. For example, the artificial neural network model 500 may include any probabilistic model or neural network model, etc., used in artificial intelligence learning methods such as machine learning and deep learning.

According to an embodiment, the artificial neural network model 500 may be associated with the first machine learning model and/or the second machine learning model illustrated in FIG. 4. The artificial neural network model 500 may include an artificial neural network configured to determine whether input data generated at a user terminal was inputted by a macro bot.

The artificial neural network model 500 may be implemented as a multilayer perceptron (MLP), which consists of a plurality of layers of nodes and connections between them. The artificial neural network model 500 according to the embodiment may be implemented using one of various neural network structures that include an MLP. As illustrated in FIG. 5, the artificial neural network model 500 may include: an input layer 520 that receives input signals or data 510 from external sources, an output layer 540 that outputs signals or data 550 corresponding to the input data, and n hidden layers 530_1 to 530_n that are located between the input layer 520 and the output layer 540, where n is a positive integer, and are configured to receive signals from the input layer 520, extract features, and transmit them to the output layer 540. Here, the output layer 540 may receive signals from the hidden layers 530_1 to 530_n and output data externally.

The learning methods of the artificial neural network model 500 include supervised learning, which optimizes problem-solving by learning based on the input of teacher signals (the ground truth), and unsupervised learning, which does not require teacher signals. According to an embodiment, the artificial neural network model 500 may use unsupervised learning to cluster data into a first group and a second group based on input pattern features. Additionally, or alternatively, the artificial neural network model 500 may use supervised learning to infer whether input data was generated by a macro bot. The code associated with the operation of the trained artificial neural network model 500 may be included in the detection code.

Accordingly, in the artificial neural network model 500, multiple input data and their corresponding output data are respectively matched in the input layer 520 and the output layer 540. The synaptic values between the nodes included in the input layer 520, the hidden layers 530_1 to 530_n and the output layer 540 are adjusted. Thus, the model may learn to extract the correct output corresponding to the given input. Through this learning process, the hidden features within the input data of the artificial neural network model 500 may be identified, and the synaptic values (or weights) between the nodes of the artificial neural network model 500 may be adjusted to reduce the error between the calculated output data based on the input data and the target output. The trained artificial neural network model 500 may then output a macro bot detection result in response to the input data.

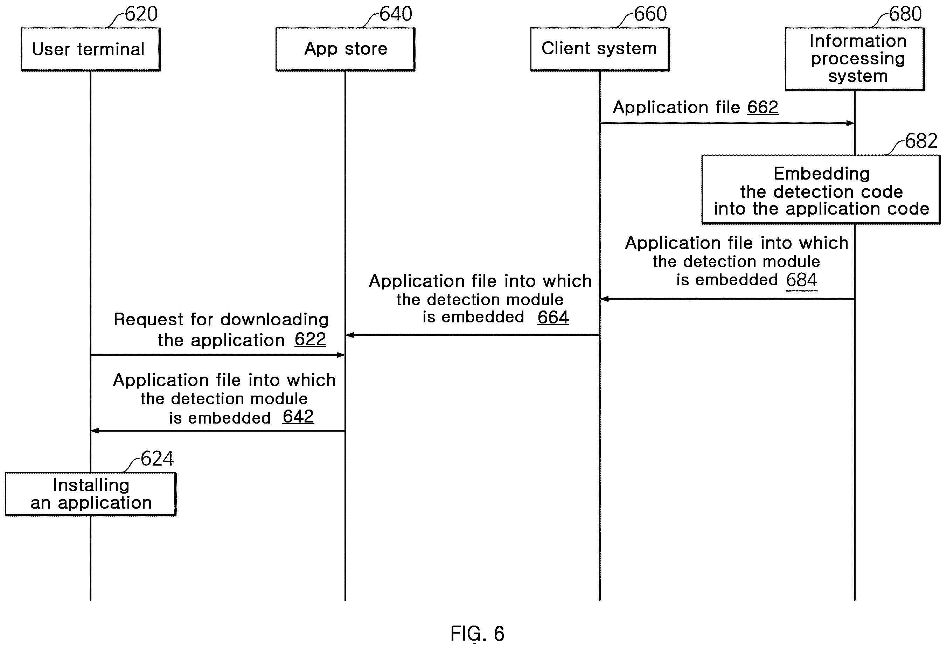

FIG. 6 is a flowchart illustrating a method for installing an application into which a detection module is embedded on a user terminal 620 according to an embodiment of the present disclosure. An information processing system 680 may receive an application file 662 containing an application code from a client system 660. The application file 662 may be associated with online gaming, internet banking, ticket reservations, online shopping or other applications. The information processing system 680 may correspond to the information processing system 230 in FIG. 2 and 3, and the client system 660 may correspond to the client system 240 in FIG. 2.

Subsequently, the information processing system 680 may embed at least one of a detection code and a security code into the application code 682. When the detection code is embedded into the application code, a detection module may be embedded into the application file. The detection module may include a macro bot detection algorithm associated with a pre-trained machine learning model. When the security code is embedded into the application code, a security module may be embedded into the application file.

According to an embodiment, the information processing system 680 may embed a detection code for executing a detection module at the application code, so that the detection module capable of detecting an input from a macro bot is embedded into the application file. For example, if the application code is compiled code, the information processing system 680 may decompile the application code to obtain a first source code associated with the application, and insert a second source code associated with the detection code into the first source code. The information processing system 680 may identify a location that contains functions or code statements associated with the input, within the entire area of the first source code, and determine a target location for inserting the second code based on the identified location. For example, the information processing system 680 may insert part or all of the second source code into the determined target location. As another example, the information processing system 680 may insert a call instruction at the identified location to call a function associated with the second source code. Once the insertion of the second source code is complete, the information processing system 680 may compile the first source code into which the second source code is inserted, thereby embedding the detection code in the application code.

As another example, in case the application code is related to assembly language (or, machine language), the information processing system 680 may analyze the application code through assembly language and determine the target location into which the detection code to be inserted within the entire area of the application code. Then, the information processing system 680 may embed the detection code for executing the detection module in the application code by inserting the detection code at the determined target location. Here, the detection code may be a machine language code or a binary code. The information processing system 680 may identify the location containing the code associated with the input within the entire area of the application code, and determine a target location based on the identified location. For example, the information processing system 680 may insert a part or all of the detection code at the identified location. As another example, the information processing system 680 may insert a call instruction that may call a function associated with the detection code at the identified location. The information processing system 680 may insert the binary-based detection code into machine language-based application code. As another example, the information processing system 680 may decompile the application code associated with machine language, insert the detection code into the decompiled source code, and then compile the application code into which the detection code is inserted.

In another example, the application code may be a script-based code. Here, the script-based code may be JavaScript or Python, etc. In this case, the information processing system 680 may analyze the application code using a script language and determine the target location into which the detection code is to be inserted within the entire area of the application code. Thereafter, the information processing system 680 may insert the detection code into the determined target location, thereby embedding the detection code for executing the detection module into the application code. Here, the detection code may be script-based code.

Additionally, or alternatively, the information processing system 680 may embed a security code for executing a security module into the application code, so that the security module for executing at least one of the following security functions may be embedded into the application file: a first function of blocking hacking attempts, a second function of performing anti-debugging operations, a third function of verifying data integrity, a fourth function of blocking an emulator, and a fifth function of blocking virtual operating system environments. For example, in case the application code is binary code, the information processing system 680 may obtain a first source code associated with the application by decompiling the application code, and insert a third source code associated with the security code into the first source code. Once the insertion of the third source code is complete, the information processing system 680 may compile the first source code into which the third source code is inserted, thereby embedding the security code into the application code. Alternatively, in case the application code is binary code, the information processing system 680 may analyze the application code through an assembly language and determine a target location into which the security code is to be inserted within the entire area of the application code. Thereafter, the information processing system 680 may insert the security code into the determined target location, thereby embedding the security code for executing the security module into the application code.

According to an embodiment, the detection code may include a code associated with the operation of a machine learning model. Here, the machine learning model may be configured to detect an input generated by a macro bot.

The information processing system 680 may then transmit the application file 684 into which the detection module and/or the security module are embedded to the client system 660. Subsequently, the client system 660 may upload the application file 664 into which the detection module and/or the security module are embedded to an app store 640.

A user terminal 620 may then send an application download request 622 to the app store 640, and download the application file 642 into which the detection module and/or the security module are embedded. Then, the user terminal 620 may install the application file into which the detection module and/or the security module are embedded 624. Once the application into which the detection module is embedded is installed on the user terminal 620, the detection module may be activated whenever the application is executed. The activated detection module may monitor whether an input generated from a macro bot is detected. For example, the detection module may monitor an input generated from a macro bot based on a macro bot detection algorithm associated with a pre-trained machine learning model. Similarly, after an application into which the security module is embedded is installed on the user terminal 620, the security module may be activated whenever the application is executed. The activated security module may execute at least one of the following functions: a first function of blocking hacking attempts, a second function of performing anti-debugging, a third function of verifying data integrity, a fourth function of preventing an emulator, and a fifth function of blocking virtual operating system environments.

FIG. 7 is a flowchart illustrating a method for training a machine learning model based on log data collected from a user terminal 720 according to an embodiment of the present disclosure. In FIG. 7, it may be assumed that the machine learning model has been additionally trained based on log data.

When an application is executed on the user terminal 720, the detection module may be activated. The activated detection module may then collect log data that includes the plurality of input data inputted on the user terminal 720 722. At this time, the detection module may accumulate the plurality of input data collected over a predetermined time period in the log data.

According to an embodiment, the input data may include touch coordinates, touch pressure values and collection timestamps. Based on the touch coordinates included in the plurality of the input data, a touch trajectory (touched gesture pattern) may be identified. Additionally, the log data may include macro bot detection results. The macro bot detection results may be determined by the detection module. That is, the detection module may determine whether a macro bot is detected or not, based on the plurality of the input data included in the log data. For example, the detection module may calculate a first feature value associated with the touch position over time based on the plurality of the touch coordinate values included in each of the plurality of input data. Moreover, the detection module may calculate a second feature value associated with the touch pressure values over time based on the plurality of the touch pressure values included in each of the plurality of input data. Additionally, the detection module may cluster the input data at predetermined time periods based on the collection timestamps included in each of the plurality of the input data. Furthermore, the detection module may calculate a group-specific touch area based on the touch coordinates included in each of the clustered input data and derive a third feature value that includes the group-specific touch area. Additionally, the detection module may determine whether the input data included in the log data has been generated by a macro bot, based on at least one of the first feature value, second feature value and third feature value, and include the determination result in the log data.

In some embodiments, weights may be applied to each of the first feature value, the second feature value and the third feature value. The result value for the log data may be derived by summing the weighted values of each of the first, second and third feature values. The result value for the log data may be calculated using [Equation 1].

【Equation 1】

$$\text{Vout} = ( a \times C1 ) + ( b \times C2 ) + ( c \times C3 )$$

Here, Vout represents the result value for the log data (i.e., the plurality of the monitored input data), C1 represents the first feature value, C2 represents the second feature value, and C3 represents the third feature value. For example, the first feature value may correspond to the value of touch position, the second feature value may correspond to the value of touch pressure, and the third feature value may correspond to the value of touch area. C1, C2 or C3 may be expressed as vector values. Additionally, 'a' represents a first weight applied to the first feature value, 'b' represents a second weight applied to the second feature value, and 'c' represents a third weight applied to the third feature value. At least one of these weights - the first weight (a), the second weight (b) and the third weight (c) - may be determined through the training of the machine learning model. Furthermore, at least one of the first weight (a), the second weight (b) and the third weight (c) may be updated through additional training of the machine learning model.

The detection module may determine whether the input has been generated by a macro bot by comparing the result value of the log data with a predefined reference value. For example, the detection module may determine that an input has been generated by a macro bot if the result value for the log data matches a predetermined reference value within a predefined threshold range.

The user terminal 720 may then transmit the collected log data 724 to the information processing system 740. For instance, the user terminal 720 may immediately transmit the log data to the information processing system 740 upon completion of log data generation. Alternatively, the user terminal 720 may collect the plurality of log data, store the collected log data in a local storage, and transmit the stored log data to the information processing system 740 at a predefined reporting time. Here, the information processing system 740 may correspond to the information processing system 230 in FIG. 2 and 3.

The information processing system 740 may store at least one of the received log data in a log database 742. Here, the log database may be a database in which log data is stored.

Once a predetermined data preprocessing time is reached, the information processing system 740 may preprocess at least one of the log data stored in the log database to generate training data 744. Similar to the pretraining process in FIG. 4, the information processing system 740 may calculate the first feature value associated with the touch position over time, based on the plurality of the touch coordinate values included in each of the plurality of the input data contained in the log data. Additionally, the information processing system 740 may calculate the second feature value associated with touch pressure value over time, based on each of the touch pressure values included in the plurality of the input data. Furthermore, the information processing system 740 may cluster the input data at intervals of predetermined time periods, based on the collection timestamps included in each of the plurality of the input data. Moreover, the information processing system 740 may calculate a group-specific touch area based on the touch coordinates included in each of the clustered input data, and calculate the third feature value including the group-specific touch area.

The information processing system 740 may then apply the training data, including at least one of the first feature value, second feature value and third feature value, to the second machine learning model 746, to further train the second machine learning model 746. At this time, the macro bot detection result included in the log data may be used as a ground truth value, allowing the second machine learning model to be trained using a supervised learning method. Upon completion of additional training using the log data, the information processing system 740 may update the second machine learning model 748, based on the further trained second machine learning model. Additionally, or alternatively, the information processing system 740 may update the detection code to reflect the algorithm of the second machine learning model which has been updated through additional training. In an embodiment, the information processing system 740 may determine whether the weights of nodes in the second machine learning model have changed or not. If it is determined that the weights of the nodes have changed, the detection code may be updated to reflect the changed weights of the nodes. For example, the information processing system 740 may determine whether at least one of the weights applied in [Equation 1] has changed, and if it is determined that changes have occurred, the detection code may be updated to reflect the changed weights.

The information processing system 740 may then generate update data 750 for updating at least one of the deployed machine learning model and detection code, and transmit the update data 750 to the user terminal 720. Thereafter, the user terminal 720 may update at least one of the stored data and the stored detection code associated with the machine learning model based on the update data 750. As a result, the machine learning model may be updated to the latest version based on the data associated with the machine learning model, and the detection module or application file may also be updated based on updating of the detection code. Meanwhile, if [Equation 1] is used in the detection module, the weights applied in [Equation 1] may be updated.

Additionally, or alternatively, the update data 752 may be transmitted to the client system 760. Thereafter, the client system 760 may upload the application containing the applied update data 752 into the app store. In this case, the user terminal 720 may download the application file having the applied update data 752 from the app store and proceed with updating at least one of the machine learning models and a detection code based on the downloaded application file. Here, the client system 760 may correspond to the client system 240 in FIG. 2.

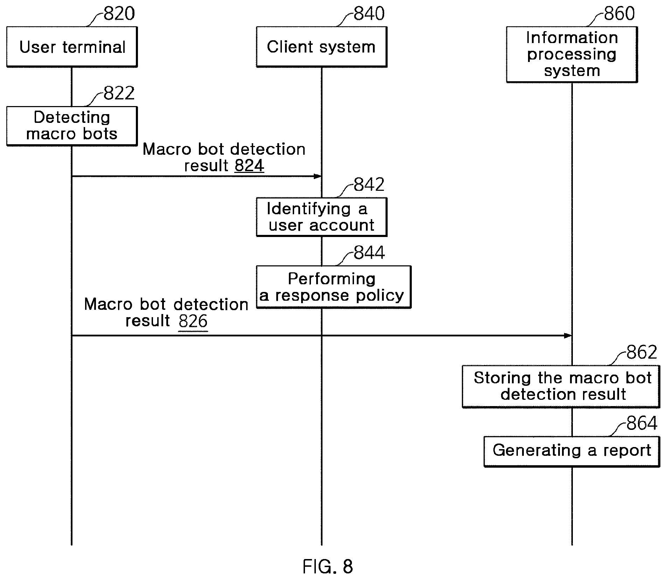

FIG. 8 is a flowchart illustrating a method in which an application is controlled after a macro bot is detected, according to an embodiment of the present disclosure. A detection module embedded into the user terminal 820 may detect an input generated by a macro bot 822. Since the method for detecting the input generated by a macro bot has been described in detail with reference to FIG. 7, a redundant explanation is omitted. According to an embodiment, the detection module may be configured to block the execution of the application in response to detecting the input from a macro program (macro bot) on the user terminal 820.

Subsequently, the detection module in the user terminal 820 may transmit macro bot detection results 824 to the client system 840. Here, the macro bot detection result 824 may include notification information indicating that the input from a macro bot has been detected, and user account information. Here, the client system 840 may correspond to the client system 240 in FIG. 2.

The information processing system 860 may then identify the user account or device 842 associated with the macro bot detection result. Here, the information processing system 860 may correspond to the information processing system 230 in FIG. 2 and 3. The information processing system 860 may then perform a predefined macro bot response policy 844. For example, the information processing system 860 may restrict access to a user account or device for a certain period of time. As another example, the information processing system 860 may send a warning message to the user's terminal. In yet another example, the information processing system 860 may perform CAPTCHA verification and, if the verification fails, terminate the execution of the application accessed by the user account or device, allowing continued execution only if the CAPTCHA verification is successful.

Additionally, the detection module in the user terminal 820 may transmit the macro bot detection result 826 to the information processing system 860.

Thereafter, the information processing system 860 may store the macro bot detection result 862. Subsequently, the information processing system 860 may generate a report based on at least one stored macro bot detection result 864. The report may include the macro bot detection rate per application type, the macro bot detection rate per time period or day of the week and other relevant data.

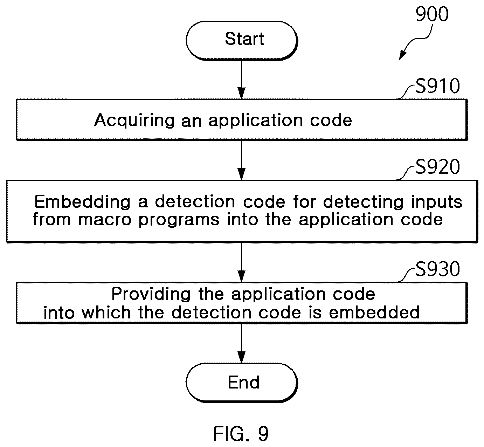

FIG. 9 is a flowchart illustrating a method 900 for providing a macro bot detection service according to an embodiment of the present disclosure. The method shown in FIG. 9 is merely an example for achieving the objectives of the present disclosure, and certain steps may be added, removed or modified as necessary. Additionally, the method illustrated in FIG. 9 may be executed by at least one processor included in an information processing system. For ease of explanation, the steps shown in FIG. 9 will be described as being performed by the processor included in the information processing system illustrated in FIG. 3.

The processor may acquire an application code from a client system via a communication module S910. According to an embodiment, the processor may receive an application file containing the application code from the client system via the communication module.

The processor may embed a detection code for detecting the input generated by a macro bot S920 into the application code. The application code may be compiled code. For example, the compiled code may be intermediate code (e.g., a Dex file, etc.) compiled from a programming language such as Java. In this case, the processor may decompile the application code to obtain a first source code associated with the application, and insert a second source code related to the detection code into the first source code. Then, the processor may compile the modified first source code containing the second code to embed the detection code in the application code. As another example, the application code may be script-based code. In this case, the processor may determine a target location within the entire area of the application code where the detection code is to be inserted, and insert the script-based detection code at the determined target location. As another example, the application code may be associated with machine language. In this case, the processor may determine a target location within the entire area of the application code where the detection code is to be inserted, and embed the detection code into the application code by inserting it at the determined target location. Here, the detection code may be a machine language code or a binary code. The processor may identify a location including code related to a touch input within the entire area of the application code, and determine the target location based on the identified location.

The processor may provide the application code into which the detection code is embedded to the client system via the communication module S930.

Thereafter, the processor may receive a plurality of log data associated with inputs from a plurality of user terminals where the application code is executed, via the communication module. Subsequently, the processor may generate a training set based on the received log data and apply the training set to a machine learning model configured to detect an input from a macro program, thereby training the machine learning model. Then, based on the trained machine learning model, the processor may update at least one of the data and the detection code associated with the machine learning model, and transmit the data to update at least one of the data and the detection code associated with the machine learning model to the client system.

Additionally, the processor may further embed a security code into the application code to execute at least one of the following security functions: a first function for blocking hacking attempts, a second function for performing anti-debugging operations, a third function for verifying data integrity, a fourth function for blocking an emulator, and a fifth function for blocking a virtual operating system environment. In this case, the processor may provide the application code into which both the security code and the detection code are embedded, to the client system via the communication module.

According to an embodiment, in response to the execution of the application code into which the detection code has been embedded, on the client system or a user terminal associated with the client system, a detection module related to the detection code is deployed on the user terminal. The deployed detection module may be configured to monitor whether an input from a macro program is detected or not on the client system or the user terminal associated with the client system. The detection module may control the application to block its execution in response to detecting the input from a macro program on the user terminal.

The above-described flowchart and explanation are merely examples, and in some embodiments, they may be implemented differently. For example, in certain embodiments, the order of the steps may be changed, some steps may be performed repeatedly, some steps may be omitted, or additional steps may be added.

The described method may be provided as a computer program stored on a computer-readable storage medium for execution on a computer system. A medium may continuously store a computer-executable program, or temporarily store it for execution or download. Additionally, the medium may be a single hardware component or a combination of a plurality of hardware components serving as various recording or storage means, and the medium is not limited to media directly connected to a computer system but may also be distributed across a network. Examples of media include magnetic storage media such as hard disks, floppy disks and magnetic tapes; optical storage media such as CD-ROMs and DVDs; magneto-optical media such as floptical disks; and storage devices configured to store program instructions, such as ROM, RAM and flash memory. Furthermore, other examples of media include recording or storage media managed by app stores that distribute applications or by various software distribution sites and servers.

The methods, operations and techniques disclosed herein may be implemented using various means. For example, these techniques may be implemented in hardware, firmware, software or a combination thereof. A person having ordinary skill in the art will understand that the various exemplary logical blocks, modules, circuits and algorithmic steps described in connection with this disclosure may be implemented in electronic hardware, computer software or a combination of both. To clarify this interchangeability between hardware and software, the various exemplary components, blocks, modules, circuits and steps have been generally described in terms of their functionality above. Whether these functionalities are implemented as hardware or software depends on the design requirements imposed on the specific application and overall system. A person having ordinary skill in the art may implement the described functionalities using various ways for each specific application. However, such implementations should not be interpreted as departing from the scope of the present disclosure.

In a hardware implementation, the processing units used to perform the disclosed techniques may be implemented within one or more of the following: one or more Application-Specific Integrated Circuits (ASICs), digital Signal Processors (DSPs), digital Signal Processing Devices (DSPDs), programmable Logic Devices (PLDs), field Programmable Gate Arrays (FPGAs), processors, controllers, microcontrollers or microprocessors, electronic devices designed to perform the functionalities described in this disclosure, computers or any combination of the above components.

Accordingly, the various exemplary logical blocks, modules and circuits described in connection with the present disclosure may be implemented or performed using: a general-purpose processor, a DSP, an ASIC, an FPGA, or another programmable logic device, discrete gate or transistor logic, discrete hardware components, or any combination thereof designed to perform the functions described herein. A general-purpose processor may be a microprocessor, but in some implementations, the processor may be any conventional processor, controller, microcontroller or state machine. The processor may also be implemented as a combination of computing devices, such as: a DSP and a microprocessor, multiple microprocessors, one or more microprocessors coupled with a DSP core or any other such configuration.

In firmware and/or software implementations, the techniques may be implemented as computer-executable instructions stored on a computer-readable medium, such as: Random Access Memory (RAM), Read-Only Memory (ROM), Non-Volatile RAM (NVRAM), Programmable Read-Only Memory (PROM), Erasable Programmable Read-Only Memory (EPROM), Electrically Erasable PROM (EEPROM), flash memory, Compact Discs (CDs), magnetic or marking data storage devices, or any other type of computer-readable medium. The instructions stored on the medium may be executed by one or more processors and may cause the processors to perform specific aspects of the functions described in the present disclosure.

When implemented in software, the above-described techniques may be stored as one or more instructions or code on a computer-readable medium, or transmitted using a computer-readable medium. Computer-readable media include both computer storage media and communication media, encompassing any media that facilitate the transfer of computer programs from one location to another. Storage media may include any available media that may be accessed by a computer. As a non-limiting example, such computer-readable medium may include RAM, ROM, EEPROM, CD-ROM or other optical disk storage, magnetic disk storage or other magnetic storage devices, or any other media that may be used to transfer or store a desired program code in the form of instructions or data structures and may be accessed by a computer. Additionally, any connection may be appropriately referred to as a computer-readable medium.

For example, if software is transmitted from a website, server or other remote source, using coaxial cable, fiber optic cable, twisted pair, digital subscriber line (DSL) or wireless technologies such as infrared, radio and microwave, then these transmission means such as coaxial cable, fiber optic cable, twisted pair, digital subscriber line (DSL) or wireless technologies such as infrared, radio and microwave fall within the definition of media. The term "disk" or "disc," as used herein, includes CDs, laser discs, optical discs, DVDs (digital versatile discs), floppy disks and Blu-ray discs, where "disks" typically reproduce data magnetically, whereas "discs" reproduce data optically using lasers. The combinations from above should also be included within the scope of computer-readable media.

A software module may reside in RAM memory, flash memory, ROM memory, EPROM memory, EEPROM memory, registers, a hard disk, a removable disk, a CD-ROM or any other known type of storage medium. An exemplary storage medium may be connected to a processor, allowing the processor to read information from or write information to the storage medium. Alternatively, the storage medium may be integrated into the processor. The processor and storage medium may be included in an ASIC. The ASIC may be incorporated into a user terminal. Alternatively, the processor and storage medium may be separate components within the user terminal.

The above-described embodiments have been described as utilizing aspects of the present disclosure in one or more standalone computer systems. However, the present disclosure is not limited thereto and may also be implemented in conjunction with any computing environment, such as a network or distributed computing environment. Furthermore, in the present disclosure, aspects of the subject matter may be implemented across multiple processing chips or devices and storage may likewise be affected across multiple devices. Such devices may include PCs, network servers and portable devices.

While the present disclosure has been described in connection with certain embodiments, various modifications and changes may be made without departing from the scope of the present disclosure as understood by those skilled in the art to which the present invention pertains. Furthermore, such modifications and changes should be considered as falling within the scope of the claims appended to this disclosure.

**Claims**

1. A method for providing a macro bot detection service performed by at least one processor, the method comprising steps of:

   acquiring an application code provided from a client system;
   embedding a detection code into the application code, the detection code being configured to detect an input from a macro program; and
   providing the application code into which the detection code is embedded to the client system.

2. The method according to claim 1,

   wherein the application code is compiled code, and
   wherein the step of acquiring the application code comprises:
   decompiling the application code to obtain a first source code associated with the application, and
   wherein the step of embedding the detection code into the application code comprises:

inserting a second source code associated with the detection code into the obtained first source code; and compiling the first source code into which the second source code is inserted.

3. The method according to claim 1,

wherein the application code is script code, and
wherein the step of embedding the detection code into the application code comprises:

determining a target location into which the detection code is to be inserted, within the entire area of the application code; and
inserting the script-based detection code at the determined target location.

4. The method according to claim 1,

wherein the application code is a code associated with a machine language, and
wherein the step of embedding the detection code into the application code comprises:

determining a target location into which the detection code is to be inserted, within the entire area of the application code; and
inserting the detection code at the determined target location.

5. The method according to claim 4,
wherein the step of determining the target location into which the detection code is to be inserted comprises:

identifying a location which contains a code associated with inputs, within the entire area of the application code; and
determining the target location based on the identified location.

6. The method according to claim 1, the method further comprising steps of, prior to the step of acquiring the application code:

training a machine learning model to detect an input from a macro program by applying a training set including a plurality of training input data to the machine learning model; and
generating the detection code based on the trained machine learning model.

7. The method according to claim 1, further comprising steps of, after the step of providing the application code into which the detection code is embedded to the client system:

receiving a plurality of log data associated with the input from a plurality of user terminals where the application code is executed;
generating a training set based on the received plurality of the log data;
training a machine learning model by applying the training set to the machine learning model configured to detect the input from the macro program; and
updating at least one of data associated with the machine learning model and the detection code, based on the trained machine learning model.

8. The method according to claim 7, further comprising the step of, after the step of updating at least one of the data associated with the machine learning model and the detection code:
transmitting the data for updating at least one of the data associated with the machine learning model and the detection code to the client system.

9. The method according to claim 1,
wherein the step of embedding the detection code into the application code comprises:

embedding a security code into the application code, where the security code is for executing at least one of a first function for blocking hacking, a second function for performing anti-debugging, a third function for checking data integrity, a fourth function for blocking an emulator, and a fifth function for blocking a virtual operating system environment; and

wherein the step of providing the application code into which the detection code is embedded to the client system comprises:
providing the application code into which the security code and the detection code are embedded to the client system.

10. The method according to claim 1,

wherein in response to execution of the application code into which the detection code is inserted at the client system or a user terminal associated with the client system, a detection module associated with the detection code is embedded into the user terminal,
wherein the detection module is configured to monitor whether the input from the macro program is detected at the client system or the user terminal associated with the client system.

11. The method according to claim 10,
wherein the detection module is further configured to block the execution of the application in response to detecting the input from the macro program on the user terminal.

12. A computer program stored on a computer-readable recording medium for executing the method according to any one of claims 1 to 11 on a computer.

13. An information processing system comprising:

a memory; and
at least one processor connected to the memory and configured to execute at least one computer-readable program stored in the memory,
wherein the at least one program comprises instructions to:

acquire application code provided from a client system;
embed detection code into the application code, where the detection code is configured to detect an input from a macro program; and
provide the application code into which the detection code is embedded to the client system.

FIG. 1

FIG. 2

FIG. 3

FIG. 4

FIG. 5

| User terminal /620 | App store /640 | Client system /660 | Information processing system /680 |

Application file 662 →

Embedding the detection code into the application code /682

← Application file into which the detection module is embedded 684

← Application file into which the detection module is embedded 664

Request for downloading the application 622 →

← Application file into which the detection module is embedded 642

Installing an application /624

FIG. 6

```
        ┌─720                      ┌─740                        ┌─760
  ┌──────────────┐        ┌──────────────┐            ┌──────────────┐
  │ User terminal│        │ Information   │           │ Client system │
  └──────────────┘        │ processing   │            └──────────────┘
        ┌─722             │ system       │
  ┌──────────────┐        └──────────────┘
  │ Collecting   │
  │ log data     │
  └──────────────┘

           Log data 724
        ───────────────────────►
                              ┌─742
                        ┌──────────────┐
                        │ Storing log data │
                        │ in a log database │
                        └──────────────┘
                              ┌─744
                        ┌──────────────┐
                        │ Pre-processing │
                        │ a log data    │
                        └──────────────┘
                              ┌─746
                        ┌──────────────┐
                        │ Trainning the machine │
                        │ learning model │
                        └──────────────┘
                              ┌─748
                        ┌──────────────┐
                        │ Updating the machine │
                        │ learning model │
                        └──────────────┘
         Update data 750
        ◄───────────────────────

                             Update data 752
                        ───────────────────────────────►
```

FIG. 7

FIG. 8

900

Start

S910

Acquiring an application code

S920

Embedding a detection code for detecting inputs from macro programs into the application code

S930

Providing the application code into which the detection code is embedded

End

FIG. 9

## INTERNATIONAL SEARCH REPORT

| International application No. |
|---|
| **PCT/KR2023/014512** |

**A. CLASSIFICATION OF SUBJECT MATTER**

**G06F 21/55**(2013.01)i; **G06F 21/51**(2013.01)i; **G06F 21/56**(2013.01)i

According to International Patent Classification (IPC) or to both national classification and IPC

**B. FIELDS SEARCHED**

Minimum documentation searched (classification system followed by classification symbols)

G06F 21/55(2013.01); A63F 13/73(2014.01); A63F 13/75(2014.01); G06F 21/56(2013.01); G06F 21/60(2013.01); G06F 8/41(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 매크로봇(macro bot), 기계학습(machine learning), 탐지(detection), 차단(block)

**C. DOCUMENTS CONSIDERED TO BE RELEVANT**

| Category* | Citation of document, with indication, where appropriate, of the relevant passages | Relevant to claim No. |
|---|---|---|
| Y | AppSealing. Appsealing Datasheet. 2021.<br>See pages 1 and 3. | 1-13 |
| Y | KR 10-2021-0133353 A (LOCK-IN COMPANY CO., LTD.) 08 November 2021 (2021-11-08)<br>See paragraph [0060]; claim 1; and figure 5. | 1-13 |
| Y | KR 10-2020-0117289 A (NETMARBLE CORPORATION) 14 October 2020 (2020-10-14)<br>See paragraph [0042]; and claims 1 and 12. | 1-13 |
| Y | KR 10-2019-0060179 A (INKA ENTWORKS, INC.) 03 June 2019 (2019-06-03)<br>See paragraph [0001]; and claims 1-2. | 3 |
| Y | Esports News UK. This company is using AI to track players' inputs and detect bots. June 2022.<br>See page 2. | 6-8 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 December 2023** | **26 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/014512**

| Patent document cited in search report | | | Publication date (day/month/year) | Patent family member(s) | | | Publication date (day/month/year) |
|---|---|---|---|---|---|---|---|
| KR | 10-2021-0133353 | A | 08 November 2021 | CN | 115812290 | A | 17 March 2023 |
| | | | | JP | 2022-534463 | A | 01 August 2022 |
| | | | | JP | 2023-040214 | A | 22 March 2023 |
| | | | | JP | 7215699 | B2 | 31 January 2023 |
| | | | | KR | 10-2021-0133352 | A | 08 November 2021 |
| | | | | KR | 10-2358099 | B1 | 08 February 2022 |
| | | | | KR | 10-2358101 | B1 | 08 February 2022 |
| | | | | SG | 11202109561 | A | 30 December 2021 |
| | | | | US | 2022-0327205 | A1 | 13 October 2022 |
| | | | | WO | 2021-221266 | A1 | 04 November 2021 |
| KR | 10-2020-0117289 | A | 14 October 2020 | KR | 10-2021-0023924 | A | 04 March 2021 |
| | | | | KR | 10-2220516 | B1 | 25 February 2021 |
| KR | 10-2019-0060179 | A | 03 June 2019 | CN | 109840400 | A | 04 June 2019 |
| | | | | CN | 109840400 | B | 29 September 2023 |
| | | | | JP | 2019-096299 | A | 20 June 2019 |
| | | | | JP | 6698774 | B2 | 27 May 2020 |
| | | | | KR | 10-2001046 | B1 | 17 July 2019 |
| | | | | US | 10867017 | B2 | 15 December 2020 |
| | | | | US | 2019-0163884 | A1 | 30 May 2019 |

Form PCT/ISA/210 (patent family annex) (July 2022)